# FASCICULE DE BREVET EUROPEEN

(11) **EP 1 436 794 B1**
(45) Date de publication et mention de la délivrance du brevet: **09.04.2008**
(21) Numéro de dépôt: 02758506.6
(22) Date de dépôt: 11.06.2002
(51) Int. Cl.: G08B 13/24, G09F 3/02, B42D 15/00

(54) **ARTICLE DE SECURITE ADHESIF NON REUTILISABLE ET DETECTABLE A DISTANCE**
NICHTWIEDERVERWENDBARER UND AUS DER FERNE ERKENNBARER KLEBSICHERHEITSARTIKEL
NON-REUSABLE AND REMOTELY DETECTABLE ADHESIVE SECURITY ARTICLE

(30) Priorité: 11.06.2001 FR 0107598
(43) Date de publication de la demande: 14.07.2004
(73) Titulaire: Arjo Wiggins Security SAS, 92130 Issy les Moulineaux (FR)
(72) Inventeur: CARN, Herlé, F-75014 Paris (FR)
(74) Mandataire: Tanty, François
(86) Numéro de dépôt international: PCT/FR2002/001986
(87) Numéro de publication internationale: WO 2002/101676

(56) Documents cités:
- EP-A- 0 459 722
- DE-A- 4 239 846
- FR-A- 2 597 405

## Description

La présente invention concerne un article de sécurité adhésif non réutilisable et détectable à distance. Elle concerne aussi son utilisation pour protéger l'ouverture/fermeture d'un emballage ou analogue.

On connaît déjà des articles adhésifs non réutilisables de type étiquettes fixées sur un produit pour afficher son prix et/ou fixées sur l'élément de fermeture/ouverture d'un emballage par exemple, le cas échéant sur le produit lui-même s'il comporte un tel élément, pour indiquer si une manipulation de l'élément de fermeture/ouverture a eu lieu. En effet il arrive que les emballages soient ouverts pour modifier le produit qu'ils contiennent ou que l'emballage soit récupéré pour mettre un produit d'imitation de moindre qualité voire dangeureux dans le cas par exemple de médicaments ou de produits nécessitant des conditions d'utilisation contrôlées.

Différentes constitutions d'étiquettes ont été proposées afin de rendre ces étiquettes non repositionnables. De telles étiquettes adhésives ont notamment été décrites dans la demande de brevet FR 2 597 405 déposée en 1984, il y a presque vingt ans.

Ces étiquettes comportent un support, des motifs discontinus cachés qui ont la propriété de réduire l'adhésivité entre la couche adhésive qui recouvre le support et le produit sur lequel est apposée l'étiquette, afin de laisser une partie de l'adhésif collé sur le produit sur lequel est apposée l'étiquette lorsqu'on décolle l'étiquette. La partie de l'adhésif qui est restée collée selon les motifs sur le produit montre qu'il y a eu une manipulation, par exemple en laissant le message informatif "OUVERT" ou "VIDE" et par ailleurs l'étiquette restante étant dépourvue d'adhésif dans les zones des motifs n'est plus conforme et comporte aussi le message informatif "OUVERT" ou "VIDE" devenu apparent.

Un inconvénient de ces étiquettes est qu'elles sont facilement décollables à chaud car jusqu'à maintenant on a utilisé des adhésifs fusibles à chaud (dits hot-melt) en particulier à base de polymères de type caoutchouc, et notamment à base de polyuréthane qui n'ont pas une résistance à la température suffisante. Les falsificateurs du produit étiquette peuvent alors facilement décoller l'étiquette dans son intégralité en chauffant l'adhésif puis la repositionner soit sur l'emballage lui-même, par exemple après l'avoir ouvert et pris ou modifié le contenu, soit sur un emballage d'imitation ou différent.

Un autre inconvénient de ces étiquettes est qu'elles peuvent être imitées par de simples étiquettes ne comportant pas la spécificité des motifs mais qui semblent à première vue identiques. Ces fausses étiquettes peuvent être fixées sur les emballages des produits à protéger déjà ouverts ou sur des emballages imités. Ceci oblige alors à un contrôle destructif car il faut décoller l'étiquette pour savoir s'il s'agit d'une vraie ou d'une fausse et donc dans le cas d'une vraie on ne pourrait plus utiliser l'étiquette et éventuellement l'emballage malgré leur authenticité. De plus un tel contrôle est très fastidieux car il faut vérifier les emballage un à un.

Il subsiste donc toujours un besoin de fournir des étiquettes adhésives non réutilisables plus fiables, apportant une plus grande sécurité et permettant un contrôle plus simple et rapide.

Les buts de l'invention sont donc de répondre à ce besoin.

La Demanderesse a mis en évidence que les buts étaient atteints si l'article de sécurité comportait à la fois un adhésif résistant à la température et un élément de sécurité détectable à distance. On entend par "détectable à distance" que l'élément de sécurité émet un signal électromagnétique détectable à distance par un appareil électronique sans même avoir besoin de voir ledit article. Une telle détection permet d'authentifier ledit article de façon rapide et non destructive.

L'invention fournit donc un article de sécurité adhésif non réutilisable et détectable à distance comportant un support (1), des motifs discontinus (2) non visibles et disposés sur le support (1) et ayant la propriété de réduire l'adhésivité entre le support (1) et une couche d'adhésif (3) qui recouvre les motifs (2) et la partie du support (1) hors les motifs, ledit adhésif (3) étant résistant à la température, et un élément de sécurité détectable à distance (4).

De préférence ledit article se caractérise par le fait que la couche d'adhésif (3) est à base d'un adhésif du groupe des polymères acryliques ou acrylates.

Selon un cas particulier de l'invention, ledit article se caractérise par le fait que le support (1) et/ou la couche d'adhésif (3) comporte des composés choisis dans le groupe des colorants, des charges minérales, des composants optiquement variables tels que des pigments iridescents, des agents réagissant aux rayonnements électromagnétiques notamment aux rayonnements ultra-violets, aux rayonnements infra-rouges, et leurs mélanges.

De préférence ledit article se caractérise par le fait que l'élément détectable à distance (4) est un fil de sécurité, et de préférence un fil magnétique de moyenne à haute coercitivité.

Les matériaux magnétiques de moyenne à haute coercitivité présentent l'avantage de ne pas être facilement démagnétisables et donc d'assurer un magnétisme détectable en permanence. Les matériaux de moyenne coercitivité ont une coercitivité comprise entre 32.10³ et 135.10³ A/m ; les plus courants sont des oxydes de fer dopés au cobalt ou des dioxydes de chrome. Les matériaux magnétiques de haute coercitivité ont une coercitivité comprise entre 135.10³ et 800.10³.A/m ; les plus courants sont les ferrites de baryum ou de strontium.

Selon un cas particulier de l'invention, ledit article se caractérise par le fait que ledit élément de sécurité (4) est collé sur la couche d'adhésif (3).

Selon un cas particulier de l'invention, ledit élément détectable à distance (4) est constitué de pigments magnétiques de moyenne à haute coercitivité inclus dans la couche d'adhésif (3).

Avantageusement ledit élément de sécurité (4) est coloré, en particulier sombre, afin de permettre une authentification visuelle donc immédiate dudit article adhésif. Dans le cas d'un fil, on observe un trait sombre à travers le support et on voit aussi chaque extrémité du fil sur les bords dudit article.

Ledit support (1) peut être un film plastique ou un papier. De préférence ledit support (1) est translucide à transparent, car cette transparence permet de bien voir les motifs (2) qui sont apparus sur l'article adhésif lorsque ledit article a été décollé.

Selon un cas particulier de l'invention, ledit support (1) est un film de polyester, en particulier un film de poly (éthyléne-téréphtalate).

Selon un autre cas particulier de l'invention, ledit support (1) est une feuille de papier calque naturel ou imprégné d'un produit transparentisant.

Selon un autre cas particulier de l'invention, ledit support peut comporter des hologrammes, en particulier ledit support (1) peut être un film holographique, ce qui apporte une authentification supplémentaire.

Ledit support (1) peut être teinté.

Ledit support (1) a pu recevoir un traitement de type Corona ou comporte un primer d'adhésion pour améliorer la tenue de l'adhésif (3).

De préférence ledit article se caractérise par le fait que les motifs (2) forment un message informatif de la fraude. Ce message informatif peut être les termes "OUVERT" ou "VIDE". L'article adhésif après avoir été décollé comportera alors aussi ce même message devenu apparent dans les zones des motifs dépourvues d'adhésif qui rendra l'article non réutilisable.

De préférence lesdits motifs (2) sont à base d'un composé choisi parmi les résines ou vernis silicones, les parraffines, les cires, ou tout autre inhibiteur d'adhésion.

L'article selon l'invention peut comporter sur la face externe du support (1), des impressions portant le nom commercial et/ou autres indications relatives au produit. L'invention concerne aussi l' utilisation d'un article adhésif de sécurité tel que défini ci-avant pour protéger la fermeture/ouverture d'un emballage ou analogue. On entend par analogue qu'il s'agit d'un équivalent à un emballage ou du produit lui-même s'il comporte un moyen d'ouverture/fermeture, tel que par exemple un flacon, une bouteille, un boitier.

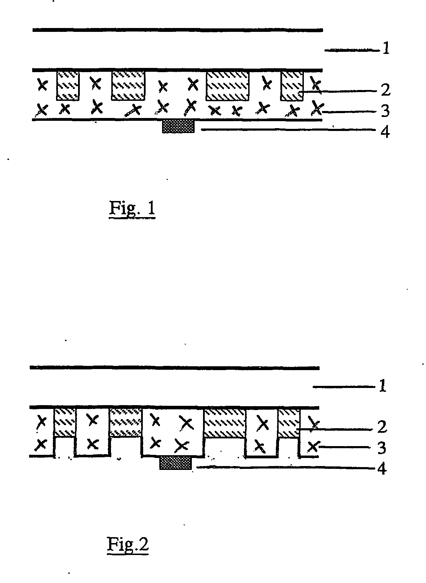

La figure 1 est une vue en coupe transversale d'un article adhésif conformément à une forme de réalisation de l'invention, l'élément détectable (4) étant un fil de sécurité, et la figure 2 est une vue de l'article après l'avoir décollé du produit sur lequel il était fixé; les proportions relatives entre les différents éléments constitutifs n'étant pas respectées pour une meilleure clarté du dessin.

Selon des modes de réalisation particuliers non limitatifs, l'article adhésif peut avoir une épaisseur comprise entre 20 et 70 µm.

Les composés formant les motifs (2) sont déposés par des moyens connus tels que des moyens d'impression.
L'adhésif (3) est aussi déposé par des moyens connus. Les adhésifs acryliques ou acrylates sont utilisés en général en milieu solvant.

## Revendications

1. Article de sécurité adhésif non réutilisable et détectable à distance comportant un support (1), des motifs discontinus (2) non visibles et disposés sur le support (1) et ayant la propriété de réduire l'adhésivité entre le support (1) et une couche d'adhésif (3) qui recouvre les motifs (2) et la partie du support (1) hors les motifs, ledit adhésif (3) étant résistant à la température, et un élément de sécurité détectable à distance (4).

2. Article selon la revendication 1, **caractérisé par le fait que** la couche d'adhésif (3) est à base d'un adhésif du groupe des polymères acryliques ou acrylates.

3. Article selon l'une des revendications précédentes, **caractérisé par le fait que** le support (1) et/ou la couche d'adhésif (3) comporte des composés choisis dans le groupe des colorants, des charges minérales, des composants optiquement variable tels que des pigments iridescents, des agents réagissant aux rayonnements électromagnétiques notamment aux rayonnements ultra-violets, aux rayonnements infra-rouges, et leurs mélanges.

4. Article selon l'une des revendications précédentes, **caractérisé par le fait que** l'élément détectable (4) est un fil de sécurité.

5. Article selon la revendication précédente, **caractérisé par le fait que** le fil de sécurité est un fil magnétique de moyenne à haute coercitivité.

6. Article selon l'une des revendications précédentes, **caractérisé par le fait que** l'élément de sécurité est collé sur la couche d'adhésif (3).

7. Article selon l'une des revendications précédentes, **caractérisé par le fait que** l'élément détectable (4) est constitué de pigments magnétiques inclus dans la couche d'adhésif (3).

8. Article selon l'une des revendications précédentes, **caractérisé par le fait que** l'élément de sécurité détectable (4) est coloré, en particulier sombre.

9. Article selon l'une des revendications précédentes, **caractérisé par le fait que** le support (1) est translucide à transparent.

10. Article selon l'une des revendications précédentes, **caractérisé par le fait que** le support (1) est un film de polyester, notamment de poly(éthylène-téréphtalate).

11. Article selon l'une des revendications précédentes, **caractérisé par le fait que** le support (1) est une feuille de papier calque naturel ou imprégné d'un produit transparentisant.

12. Article selon l'une des revendications précédentes, **caractérisé par le fait que** le support (1) comporte des hologrammes.

13. Article selon l'une des revendications précédentes, **caractérisé par le fait que** les motifs (2) forment un message informatif.

14. Article selon l'une des revendications précédentes, **caractérisé par le fait que** les motifs (2) sont à base d'un composé choisi parmi les résines ou vernis silicones, les parraffines, les cires, ou tout autre inhibiteur d'adhésion.

15. Utilisation d'un article adhésif de sécurité défini selon l'une des revendications précédentes pour protéger la fermeture/ouverture d'un emballage ou analogue.

## Claims

1. Remotely detectable non-reusable adhesive security article comprising a support (1), invisible discontinuous patterns (2) placed on the support (1) and having the property of reducing the adhesion between the support (1) and a layer of adhesive (3) that covers the patterns (2) and that part of the support (1) away from the patterns, said adhesive (3) being temperature-resistant, and a remotely detectable security element (4).

2. Article according to Claim 1, **characterized in that** the layer of adhesive (3) is based on an adhesive of the group of acrylic or acrylate polymers.

3. Article according to either of the preceding claims, **characterized in that** the support (1) and/or the layer of adhesive (3) includes compounds chosen from the group of colorants, mineral fillers, optically variable components, such as iridescent pigments, agents that react to electromagnetic radiation, especially to ultraviolet radiation or to infrared radiation, and mixtures thereof.

4. Article according to one of the preceding claims, **characterized in that** the detectable element (4) is a security thread.

5. Article according to the preceding claim, **characterized in that** the security thread is a magnetic thread of medium-to-high coercivity.

6. Article according to one of the preceding claims, **characterized in that** the security element is bonded to the layer of adhesive (3).

7. Article according to one of the preceding claims, **characterized in that** the detectable element (4) consists of magnetic pigments included in the layer of adhesive (3).

8. Article according to one of the preceding claims, **characterized in that** the detectable security element (4) is coloured, in particular dark coloured.

9. Article according to one of the preceding claims, **characterized in that** the support (1) is translucent to transparent.

10. Article according to one of the preceding claims, **characterized in that** the support (1) is a polyester film, especially a polyethylene terephthalate film.

11. Article according to one of the preceding claims, **characterized in that** the support (1) is a sheet of natural tracing paper or one impregnated with a transparentizing substance.

12. Article according to one of the preceding claims, **characterized in that** the support (1) includes holograms.

13. Article according to one of the preceding claims, **characterized in that** the patterns (2) form an informative message.

14. Article according to one of the preceding claims, **characterized in that** the patterns (2) are based on a compound chosen from silicone resins or varnishes, paraffins, waxes, or any other adhesion inhibitor.

15. Use of an adhesive security article defined according to one of the preceding claims for protecting the opening/closing of a package or the like.

## Patentansprüche

1. Klebender, nicht wiederverwendbarer und aus der Ferne detektierbarer Sicherheitsartikel bestehend aus einem Träger (1), unsichtbaren unterbrochenen Mustern (2), welche auf dem Träger (1) angeordnet sind und die Eigenschaft haben, die Haftung zwischen dem Träger (1) und einer Klebstoffschicht (3) welche die Muster (2) bedeckt, und dem Teil des Trägers (1), der außerhalb der Muster liegt, zu verringern, wobei der Klebstoff (3) temperaturbeständig ist, und aus einem aus der Ferne detektierbaren Sicherheitselement (4).

2. Artikel nach Anspruch 1, **dadurch gekennzeichnet, dass** die Klebstoffschicht (3) auf der Basis eines Klebstoffs aus der Gruppe der Polymeracryle oder Polymeracrylate formuliert ist.

3. Artikel nach einem der vorangegangenen Ansprüche, **dadurch gekennzeichnet, dass** der Träger (1) und/oder die Klebstoffschicht (3) Verbindungen aus der Gruppe bestehend aus Farbmitteln, anorganischen Füllstoffen, optisch variablen Komponenten wie irisierenden Pigmenten, Mitteln, die mit elektromagnetischer Strahlung, insbesondere Ultraviolettstrahlung oder Infrarotstrahlung reagieren, und Mischungen davon umfasst.

4. Artikel nach einem der vorangegangenen Ansprüche, **dadurch gekennzeichnet, dass** das detektierbare Element (4) ein Sicherheitsfaden ist.

5. Artikel nach einem der vorangegangenen Ansprüche, **dadurch gekennzeichnet, dass** es sich bei dem Sicherheitsfaden um einen magnetischen Faden mit mittlerer bis hoher Koerzitivkraft handelt.

6. Artikel nach einem der vorangegangenen Ansprüche, **dadurch gekennzeichnet, dass** das Sicherheitselement auf die Klebstoffschicht (3) geklebt ist.

7. Artikel nach einem der vorangegangenen Ansprüche, **dadurch gekennzeichnet, dass** das detektierbare Element (4) aus in der Klebstoffschicht (3) enthaltenen magnetischen Pigmenten besteht.

8. Artikel nach einem der vorangegangenen Ansprüche, **dadurch gekennzeichnet, dass** das detektierbare Sicherheitselement (4) farbig ist, insbesondere dunkel.

9. Artikel nach einem der vorangegangenen Ansprüche, **dadurch gekennzeichnet, dass** der Träger (1) durchsichtig bis transparent ist.

10. Artikel nach einem der vorangegangenen Ansprüche, **dadurch gekennzeichnet, dass** der Träger (1) ein Polyesterfilm ist, insbesondere aus Poly(ethylenterephtalat).

11. Artikel nach einem der vorangegangenen Ansprüche, **dadurch gekennzeichnet, dass** der Träger (1) ein Blatt aus natürlichem oder mit einer transparentierenden Substanz imprägnierten Pauspapier ist.

12. Artikel nach einem der vorangegangenen Ansprüche, **dadurch gekennzeichnet, dass** der Träger (1) Hologramme aufweist.

13. Artikel nach einem der vorangegangenen Ansprüche, **dadurch gekennzeichnet, dass** die Muster (2) einen Informationstext bilden.

14. Artikel nach einem der vorangegangenen Ansprüche, **dadurch gekennzeichnet, dass** die Muster (2) aus einer Verbindung bestehen, die aus der Gruppe der Harze oder Silikonlackstoffe, der Paraffine, Wachse oder eines jeden anderen Haftungsinhibitors gewählt ist.

15. Verwendung eines klebenden Sicherheitsartikels nach einem der vorangegangenen Ansprüche zum Schutz des Verschlusses/der Öffnung einer Verpackung oder dergleichen.
